# EUROPÄISCHE PATENTANMELDUNG

(11) **EP 1 498 390 A2**
(43) Veröffentlichungstag der Anmeldung: **19.01.2005**
(21) Anmeldenummer: 04016066.5
(22) Anmeldetag: 08.07.2004
(51) Int. Cl.: C01C 1/18, B01J 2/30, C06B 31/28

(54) **Partikel aus Ammoniumnitrat (AN) und Verfahren zu ihrer Herstellung**

(30) Priorität: 17.07.2003 DE 10332730
(71) Anmelder: Fraunhofer-Gesellschaft zur Förderung der angewandten Forschung e.V., 80686 München (DE)
(72) Erfinder: Teipel, Ulrich, Dr. Ing., 76327 Pfinztal (DE); Heintz, Thomas, Dipl.-Ing., 76327 Pfinztal (DE); Werner, Reinhard, 76149 Karlsruhe (DE); Krause, Horst, Dr., 76327 Pfinztal (DE)
(74) Vertreter: Lasch, Hartmut Dipl.-Ing.

(57) **Zusammenfassung**

Es wird ein Verfahren zur Herstellung von sphärischen Partikeln aus Ammoniumnitrat (AN) vorgeschlagen, indem das AN geschmolzen, die Schmelze unter Bildung einer Dispersion zerstäubt und die Dispersion unter Erhalt der Partikel abgekühlt wird. Um die Agglomerationsneigung der erzeugten Partikel zu verringern, ist erfindungsgemäß vorgesehen, daß dem AN vor dem Schmelzen oder dem bereits geschmolzenen AN vor der Zerstäubung wenigstens ein Antiagglomerationsmittel aus der Gruppe Metalloxide, Metallnitrate, Metallhydroxide, Metallcarbonate, Metallhydroxidnitrate und Metallhydroxidcarbonate mit einem Metall aus der vierten Periode der Übergangsmetalle mit einer Wertigkeit von 2 in einer Menge von höchstens 0,5 Mass.-% bezogen auf die Masse von AN zugesetzt wird, wobei das Antiagglomerationsmittel im wesentlichen homogen in der AN-Schmelze verteilt und die Mischung anschließend zerstäubt wird. Die Erfindung betrifft ferner solchermaßen hergestellte Partikel aus AN, deren Partikelgröße insbesondere zwischen 1 µm und 500 µm beträgt.

## Beschreibung

Die Erfindung betrifft ein Verfahren zur Herstellung von sphärischen Partikeln aus Ammoniumnitrat (AN), indem das AN geschmolzen, die Schmelze unter Bildung einer Dispersion zerstäubt und die Dispersion unter Erhalt der Partikel abgekühlt wird. Sie ist ferner auf sphärische Partikel aus Ammoniumnitrat (AN) gerichtet, welche insbesondere nach einem solchen Verfahren hergestellt sind.

Ammoniumnitrat (AN) ist als Oxidator für Treib- und Explosivstoffe bzw. seinerseits als Treib- und Explosivstoff von großer Bedeutung. Es wird insbesondere in Raketentreibstoffen oder in Gasgeneratoren für Airbags eingesetzt. In der Anwendung sind sowohl anläßlich der Herstellung als auch für die Verarbeitung sphärische Partikel mit regelmäßiger Kornform erwünscht.

In vielen Fällen besteht der Bedarf eines Zusatzes von Additiven, um insbesondere die Lagerfähigkeit zu verbessern und ein Zusammenbacken der durch Sprühzerstäubung der Schmelze erhaltenen Partikel zu verhindern. Aufgrund der Hygroskopizität von AN und der ausgeprägten Neigung zur Bildung von Agglomeraten läßt sich AN in reiner Form praktisch nicht als sphärische Feinpartikel herstellen, wobei die Agglomerationsneigung mit abnehmender Partikelgröße stark zunimmt.

Die Agglomeration der erzeugten Partikel führt einerseits zu einer erheblichen Beeinträchtigung der Sprühzerstäubung, da die mit der Schmelze in Kontakt tretenden Anlagenteile innerhalb kurzer Betriebszeit verstopfen und eine aufwendige Reinigung erfordern, was einen Produktionsausfall nach sich zieht. Andererseits weisen die erzeugten Partikel eine schlechte Lagerfähigkeit auf, da sie bereits nach kurzen Standzeiten agglomerieren, so daß grobe und unregelmäßige Agglomerate mit schlechter Rieselfähigkeit entstehen.

Demgegenüber ist jedoch häufig eine möglichst hohe Reinheit von AN erforderlich, um beispielsweise - im Falle des Einsatzes als Oxidator für Raketentreibstoffe - eine Beeinträchtigung der Abbrandeigenschaften durch Fremdkontaminationen oder z.B. - im Falle des Einsatzes in Gasgeneratoren für Airbags, insbesondere von Kraftfahrzeugen - den Umwelt-, Gesundheits- und Sicherheitsanforderungen zu genügen.

Um eine Agglomeration von AN-Partikeln bzw. ein Zusammenbacken derselben zu verhindern, werden diese häufig oberflächig mit einem Antibackmittel beschichtet. Die EP 0 648 190 B1 beschreibt ein Verfahren zur Herstellung von fließfähigen Partikeln aus AN, indem die fertigen AN-Partikel mit einer wäßrigen Lösung aus einem anorganischen Salz, insbesondere Magnesium- oder Calciumnitrat, besprüht und auf diese Weise mit dem Hydrat des eingesetzten Salzes beschichtet werden. Indes nimmt das hydroskopische AN auf diese Weise sehr viel Wasser aus der Sprühlösung auf, was es insbesondere aus Gründen einer hohen Reinheit zu vermeiden gilt. Ferner lassen sich, sofern die AN-Partikel durch Sprühzerstäubung hergestellt werden sollen, Beeinträchtigungen der Anlagenteile durch Agglomerationen der erzeugten AN-Partikel oder auch der Schmelze nicht verhindern.

Ferner werden als Antibackmittel für AN feinpartikuläre Substanzen eingesetzt, welche oberflächig auf die AN-Partikel aufgebracht werden. Der US 2 901 317 A sind AN-Partikel entnehmbar, welche mit 0,2 bis 5 Mass.-% feinpartikulären Kupferoxides beschichtet sind. Die Beschichtung der AN-Partikel geschieht durch Mahlen der AN-Partikel mit dem feinpartikulären Antibackmittel in Gegenwart von Feuchtigkeit. Hinsichtlich der Nachteile gilt das oben zur EP 0 648 190 B1 gesagte. Entsprechendes gilt für die US 3 368 929 A. Diese beschreibt AN-Partikel, welche nachträglich mit 0,1 bis 10 Mass.-% eines Antibackmittels, wie Calciumchlorid, Kieselerde, Baryt, Wachs, Kreide oder dergleichen, beschichtet bzw. gecoatet worden sind.

Der Erfindung liegt die Aufgabe zugrunde, ein Sprühzerstäubungsverfahren zur Herstellung von sphärischen Partikeln aus AN der eingangs genannten Art dahingehend weiterzubilden, daß eine Agglomeration des AN sowohl während der Herstellung als auch als fertiges Produkt bei einer möglichst hohen Produktreinheit wirksam vermindert wird. Sie ist ferner auf sphärische Partikel aus AN mit äußerst geringer Agglomerationsneigung gerichtet.

Der verfahrenstechnische Teil dieser Aufgabe wird erfindungsgemäß bei einem Verfahren der eingangs genannten Art dadurch gelöst, daß dem AN vor dem Schmelzen oder dem bereits geschmolzenen AN vor der Zerstäubung wenigstens ein Antiagglomerationsmittel aus der Gruppe Metalloxide, Metallnitrate, Metallhydroxide, Metallcarbonate, Metallhydroxidnitrate und Metallhydroxidcarbonate mit einem Metall aus der vierten Periode der Übergangsmetalle mit einer Wertigkeit von 2 in einer Menge von höchstens 0,5 Mass.-% bezogen auf die Masse von AN zugesetzt wird, wobei das Antiagglomerationsmittel im wesentlichen homogen in der AN-Schmelze verteilt und die Mischung anschließend zerstäubt wird.

Überraschenderweise wurde gefunden, daß bereits äußerst geringe Mengen der homogen in die AN-Schmelze eingemischten Antiagglomerationsmittel der genannten Art mit einem Anteil von höchstens 0,5 Mass.-% sowohl eine Agglomeration des erhaltenen Produkts während der Lagerung als auch insbesondere schon bei der Herstellung weitestgehend verhindern, so daß ein feinpartikuläres Produkt mit einer hohen Reinheit von mindestens 99,5% erhältlich ist. Dies überrascht insoweit, als die erfindungsgemäßen Antiagglomerationsmittel im Innern der AN-Partikel verteilt sind, während herkömmliche Antibackmittel an deren Oberfläche wirken. Dabei lassen sich rieselfähige, regelmäßige, sphärische Partikel mit sehr kleiner Partikelgröße bis zu etwa 1 µm herstellen, welche sich z.B. sowohl für den Einsatz in Raketentreibstoffen als auch in Gasgeneratoren für Airbags anbieten.

Zugleich werden Störungen der für die Herstellung der Partikel eingesetzten Produktionsanlagen, wie ein Verstopfen der zur Sprühzerstäubung eingesetzten Düsen, zuverlässig vermieden. Die Sprühzerstäubung als solche kann in bekannter Weise geschehen, indem das AN aufgeschmolzen und das Antiagglomerationsmittel zugesetzt wird. Anschließend wird die schmelzflüssige Mischung unter Bildung einer Dispersion mittels Düsen zerstäubt und die Dispersion abgekühlt, wobei die Feinpartikel mit einer homogenen Verteilung des Antiagglomerationsmittels erhalten werden.

Der Einsatz einiger der erfindungsgemäß vorgesehenen Antiagglomerationsmittel ist in höheren Konzentrationen bereits zur Phasenstabilisierung von AN bekannt, wobei das in Abhängigkeit von der Temperatur in fünf verschiedenen Kristallmodifikationen vorliegende AN in einer jeweils gewünschten Modifikation stabilisiert werden soll, um temperaturbedingte Änderungen im Kristallgefüge zu verhindern, die aufgrund der unterschiedlichen Dichte der verschiedenen Kristallmodifikationen zu Spannungen und Rißbildungen im Gefüge führen können.

So ist es beispielsweise bekannt, die tetragonale (Modifikation II) und die orthorhombisch pseudotetragonale Kristallmodifikation (Modifikation V) von AN, welche eine ähnliche Dichte aufweisen, sowie die orthorhombische Kristallmodifikation (Modifikation IV) von AN in einem Temperaturintervall von etwa -100°C bis 100°C durch den Zusatz von Metallammonikaten (Metall-Amminkomplexen) zu stabilisieren, wobei vornehmlich Amminkomplexe der Metalle Kupfer, Nickel und Zink eingesetzt werden (DE 17 67 757 A1, DE 21 25 755 C3, EP 0 405 272 B1).

Die Herstellung der Metall-Amminkomplexe bzw. der Einbau in das Kristallgitter des AN gelingt beispielsweise durch Aufschmelzen einer Mischung von AN und einem Metalloxid (DE 21 25 755 C3). Hierbei wird das AN mit bis zu 10% des Metalloxids gemischt, aufgeschmolzen und sodann die Schmelze in den festen Zustand überführt. Demgegenüber geschieht die Bildung des Metall-Amminkomplexes gemäß der EP 0 405 272 B1 durch Umsetzung des Metalloxids mit AN in einer Festkörperreaktion bei 110°C bis 170°C. Bei dem in der DE 36 42 850 C1 beschriebenen Verfahren wird das AN im geschmolzenen Zustand mit Kupfer- und/oder Nickeloxid unter Bildung der jeweiligen Diamminkomplexe versetzt.

Gemäß der US 5 071 630 A1 wird anstelle von Kupfer- und/oder Nickeloxid Zinkoxid zur Bildung des Diamminkomplexes verwendet. Dem AN wird in der schmelzflüssigen Phase Zinkoxid zugesetzt, die Schmelze mit Inertgas getrocknet und mit Ammoniak (NH₃) beaufschlagt, um das bei der Trocknung ausgetragene NH₃ zu ersetzen. Anschließend wird die Schmelze gegebenenfalls in reinem Ammoniumnitrat gelöst und das erhaltene Produkt abgekühlt und granuliert.

Die DE 198 44 350 A1 beschreibt ein Verfahren zur Herstellung von phasenstabilisiertem, partikelförmigem AN, bei welchem der Einbau eines Diamminkomplexes der Metalle Kupfer, Nickel oder Zink in das Kristallgitter des AN durch Zusatz von Carbonaten, Hydroxidcarbonaten oder Hydroxiden der genannten Metalle geschieht.

In der DE 44 35 524 A1 geht es schließlich um einen AN-Partikel enthaltenden Festtreibstoff, wobei für die Herstellung des AN als solchem ein Sprühzerstäubungsverfahren entsprechend dem Oberbegriff des Anspruchs 1 vorgesehen sein kann. Zur Phasenstabilisierung des AN kann dieses mit 1 bis 7 Mass.-% Nickeloxid oder 3 bis 15 Mass.-% Kaliumoder Cäsiumnitrat umgesetzt sein. Zusätzlich ist ein nachträglicher Zusatz von Antibackmitteln in Form von feinpartikulärem Siliciumdioxid, Natriumlaurylsulfat, Tricalciumphosphat oder andern oberflächenaktiven Tensiden zu den fertigen AN-Partikeln vorgesehen. Im übrigen enthält der beschriebene Festtreibstoff neben den gegebenenfalls phasenstabilisierten und mit einem Antibackmittel beschichteten AN-Partikeln ein Bindesystem und einen energiereichen Weichmacher sowie einen Abbrandmodifikator aus Vanadium/Molybdänoxid mit einer Wertigkeit von 6 bzw. 4 und 6.

Von sämtlichen, zur Phasenstabilisierung von AN bekannten Verfahren unterscheidet sich das erfindungsgemäße Verfahren dadurch, daß die erfindungsgemäßen Antiagglomerationsmittel in einer Menge von höchstens 0,5 Mass.-% bezogen auf die Masse an AN eingesetzt werden, d.h. mit einem Anteil, bei welchem noch keine Phasenstabilisierung von AN, aber überraschenderweise eine erheblich verminderte Agglomerationsneigung von AN auftritt, während bei einem Zusatz zumindest einiger der gemäß dem Stand der Technik verwendeten Stoffe in einer zur Phasenstabilisierung von AN hinreichenden Menge, d.h. jedenfalls mehr als 0,5 Mass.-%, die entgegengesetzte Wirkung beobachtet wird, d.h. die Agglomerationsneigung des AN bleibt zumindest unverändert, was erforderlichenfalls den zusätzlichen Einsatz von herkömmlichen Antibackmitteln nötig macht (DE 44 35 534 A1), welche an der Oberfläche der AN-Partikel wirken, so daß sich eine noch geringere Reinheit des Produktes ergibt.

In bevorzugter Ausführung ist vorgesehen, daß das Antiagglomerationsmittel in einer Menge zwischen 0,01 Mass.-% und 0,2 Mass.-%, insbesondere in einer Menge zwischen 0,02 Mass.-% und 0,1 Mass.-%, zugesetzt wird. Die genannten Mengenbereiche des Antiagglomerationsmittels führen in den meisten Fällen bereits zu einer weitestgehenden Verhinderung einer Bildung von Verklumpungen des AN sowohl bei der Herstellung mittels Sprühzerstäubung als auch bei der Lagerung der erzeugten Partikel.

Während zur Erzielung der erfindungsgemäßen Antiagglomerationswirkung grundsätzlich ein Antiagglomerationsmittel mit einem Metall aus der vierten Periode der Übergangsmetalle, d.h. ein Metall mit der Ordnungszahl 21 bis 30, also Scandium (Sc), Titan (Ti), Vanadium (V), Chrom (Cr), Mangan (Mn), Eisen (Fe), Kobalt (Co), Nickel (Ni), Kupfer (Cu) oder Zink (Zn), eingesetzt werden kann, wird vorzugsweise ein Antiagglomerationsmittel mit einem Metall aus der Gruppe Nickel, Kupfer und Zink eingesetzt. Dabei wird das Metall bzw. werden die Metalle aus der vierten Periode der Übergangsmetalle mit einer Wertigkeit von 2 eingesetzt, so daß bei der Herstellung von sphärischen Partikeln aus AN zwar geringe Mengen eines Diamminkomplexes ([Me²⁺(NH₃)₂]) gebildet werden können, welche - wie bereits erwähnt - jedoch zur Phasenstabilisierung des AN nicht ausreichen, aber zu einer zufriedenstellenden Verminderung deren Agglomerationsneigung führen. Als besonders vorteilhaft hat sich beispielsweise der Einsatz von Antiagglomerationsmitteln in Form von Nickel-, Kupfer- und/oder Zinkoxid bzw. -hydroxid, wie NiO, CuO, ZnO, Ni(OH)₂, Cu(OH)₂ und/ oder Zn(OH)₂ erwiesen.

Da die erfindungsgemäßen Antiagglomerationsmittel nicht nach Art herkömmlicher Antibackmittel, also an der Oberfläche der AN-Partikel wirken, sondern homogen in der AN-Matrix verteilt sein müssen, wird vermutet, daß die Wirksamkeit der Antiagglomerationsmittel auf der Bildung eines Diamminkomplexes [Me²⁺(NH₃)₂] beruht, wie er als solcher zur Phasenstabilisierung bekannt ist. Indes führt die äußerst geringe Menge and Additiv gerade (noch) nicht zur Phasenstabilisierung, aber eben überraschenderweise zu einer verminderten Agglomeration des AN.

Selbstverständlich können auch Mischungen von Antiagglomerationsmitteln mit unterschiedlichen Metallen und/oder mit unterschiedlichen Anionen aus der Gruppe Oxide (z.B. MeO), Nitrate (z.B. Me(NO₃)₂), Hydroxide (z.B. Me(OH)₂), Carbonate (z.B. Me(CO₃)₂), Hydroxidnitrate (Meₘ(OH)ₙ ^{·} Meₓ(OH)_{y}) und Hydroxidcarbonate (Meₘ(OH)ₙ ^{·} Meₓ (CO₃)_{y}) mit m; n; x; y = 1; 2; 3; ... eingesetzt werden.

Wie bereits angedeutet, wird das Antiagglomerationsmittel zweckmäßig der Schmelze von AN zugesetzt, wobei es selbstverständlich auch dem AN in fester Form zugesetzt und zumindest das AN anschließend geschmolzen und die Mischung der Sprühzerstäubung zugeführt werden kann.

Die Antiagglomerationsmittel können dem AN in geschmolzenem und insbesondere auch in feinpartikulärem Zustand zugesetzt werden, wobei in letztgenanntem Fall vorzugsweise vorgesehen ist, daß das Antiagglomerationsmittel mit einer Partikelgröße zwischen 1 nm und 500 nm, insbesondere zwischen 10 nm und 50 nm, zugesetzt wird. Hierdurch wird eine besonders homogene Verteilung der Antiagglomerationsmittel in der Schmelze und folglich - nach Zerstäubung derselben - in den Partikeln erreicht, was zu einer wirksamen Verhinderung deren Agglomerationsneigung führt.

Die Erfindung betrifft auch sphärische Partikel aus Ammoniumnitrat (AN), welche dadurch gekennzeichnet sind, daß sie wenigstens ein Antiagglomerationsmittel aus der Gruppe Metalloxide, Metallnitrate, Metallhydroxide, Metallcarbonate, Metallhydroxidnitrate und Metallhydroxidcarbonate mit einem Metall aus der vierten Periode der Übergangsmetalle mit einer Wertigkeit von 2 in einer Menge von höchstens 0,5 Mass.-% bezogen auf die Masse von AN enthalten, wobei das Antiagglomerationsmittel im wesentlichen homogen in den AN-Partikeln verteilt ist. Dabei enthalten die beispielsweise mittels eines Verfahrens der vorgenannten Art hergestellten Partikel das Antiagglomerationsmittel vorzugsweise in einer Menge zwischen 0,01 Mass.-% und 0,2 Mass.-%, insbesondere zwischen 0,02 Mass.-% und 0,1 Mass.-%. Als Antiagglomerationsmittel kommen insbesondere die oben genannten Stoffe zum Einsatz.

In bevorzugter Ausführung ist vorgesehen, daß die Partikel das Antiagglomerationsmittel in Form von in der Matrix aus AN im wesentlichen homogen verteilten Feinpartikeln mit einer Partikelgröße zwischen 1 nm und 500 nm, insbesondere zwischen 10 nm und 50 nm, enthalten.

In weiterhin vorteilhafter Ausgestaltung weisen die Partikel aus AN eine Partikelgröße zwischen 1 µm und 500 µm, vorzugsweise zwischen 2 µm und 200 µm, insbesondere zwischen 5 µm und 100 µm, auf, wobei die erfindungsgemäß in einer Menge von bis zu 0,5 Mass.-% enthaltenen Antiagglomerationsmittel auch im Falle solcher, sehr kleiner Partikel eine Agglomeration der Partikel - sei es bei der Herstellung oder bei der Lagerung - zuverlässig verhindern.

Nachstehend ist die Erfindung anhand eines Ausführungsbeispiels unter Bezugnahme auf die Zeichnungen näher erläutert. In der Zeichnung zeigen:
- Fig. 1: ein Differenzscanning-Kalorimetrie-Diagramm von reinem Ammoniumnitrat (AN);
- Fig. 2: ein Differenzscanning-Kalorimetrie-Diagramm einer Mischung aus 99,9 Mass.-% Ammoniumnitrat (AN) und 0,1 Mass.-% Zink(II)oxid (ZnO); und
- Fig. 3: ein Differenzscanning-Kalorimetrie-Diagramm einer Mischung aus 97 Mass.-% Ammoniumnitrat (AN) und 3 Mass.-% Zink(II)oxid (ZnO).

### Ausführungsbeispiel

50 kg Ammoniumnitrat (AN) in grobpartikulärem, rohem Zustand werden in einen Schmelzkessel überführt und auf einen Bereich oberhalb seiner Schmelztemperatur, beispielsweise auf etwa 180°C, erhitzt. Der Schmelze wird ein Antiagglomerationsmittel in Form von Zink(II)oxid (ZnO) mit einem Anteil von 0,08 Mass.-% bezogen auf die Masse von AN in feinpartikulärer Form zugesetzt und die Mischung mittels eines Propellerrührers ca. eine Stunde homogenisiert. Die Drehzahl des Rührwerks wird auf 300 U/min eingestellt. Nach hinreichender Homogenisierung wird die mit dem ZnO beladene Schmelze mittels einer Zweistoffdüse zerstäubt, wobei die hierbei erhaltene Dispersion in einen von trockener Umgebungsluft durchströmten Gasraum eingeleitet wird. Die nach Erstarren der AN-Tröpfchen erhaltenen Partikel weisen einen durchschnittlichen Partikeldurchmesser von etwa 50 µm auf. Die Partikelform ist sphärisch und regelmäßig; das erzeugte Produkt ist rieselfähig und agglomeriert weder in der Zweistoffdüse noch nach längerer Standzeit.

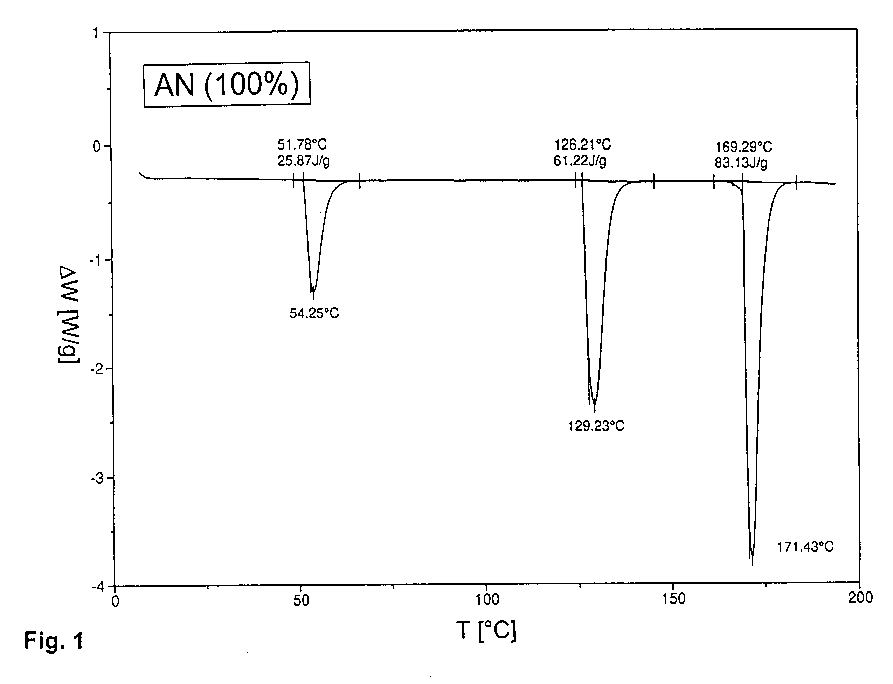

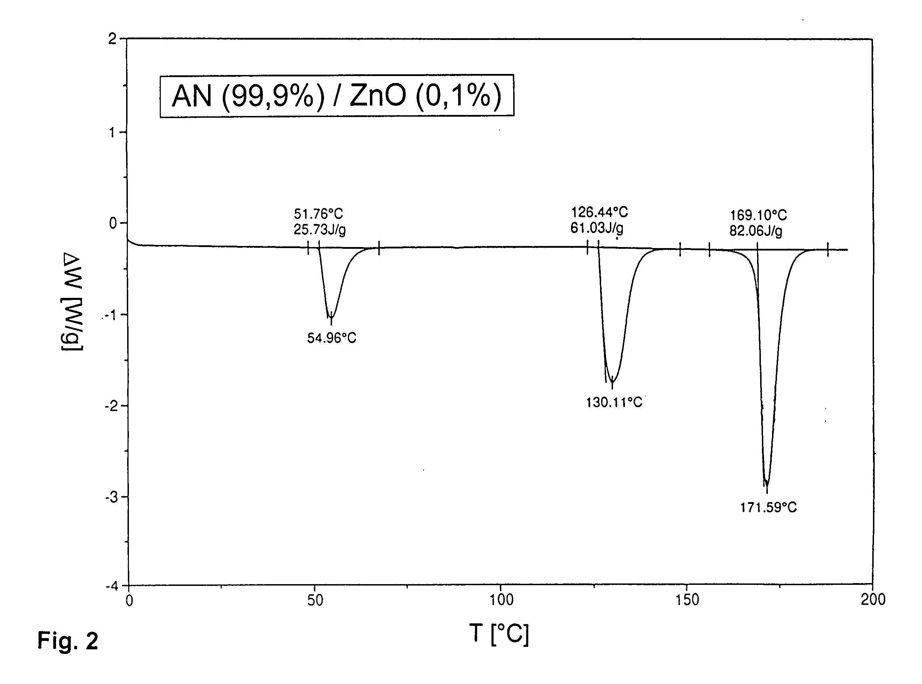

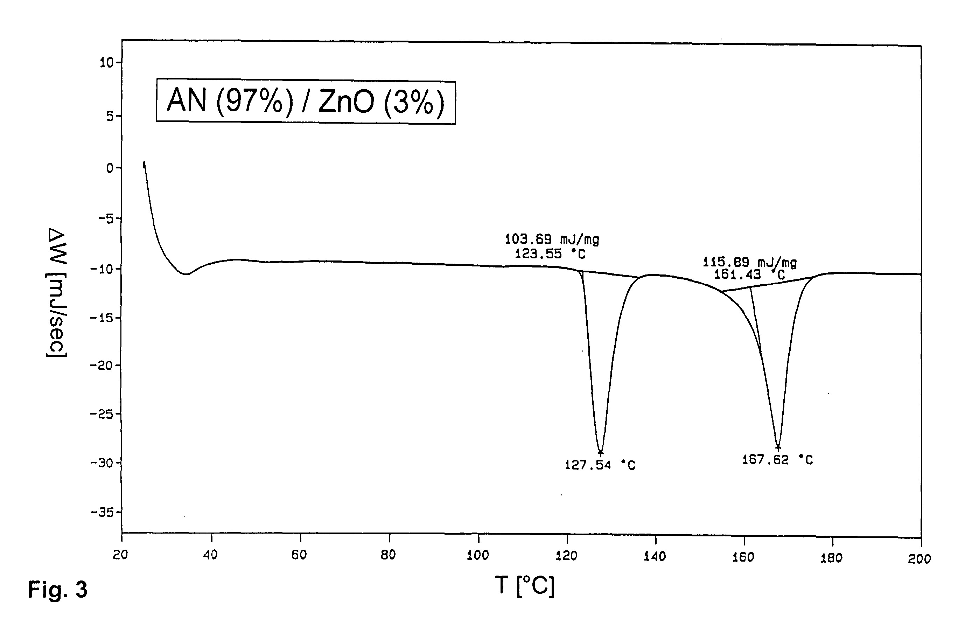

In den Fig. 1 bis 3 sind die mittels Differenzscanning-Kalorimetrie (DSC) erhaltenen Diagramme von reinem AN (Fig. 1), einer Mischung aus 99,9 Mass.-% AN und 0,1 Mass.-% ZnO sowie einer Mischung aus 97 Mass.-% AN und 3 Mass.-% ZnO dargestellt. Die Diagramme dienen - exemplarisch für den Fall des erfindungsgemäßen Einsatzes von Zink(II)oxid als Antiagglomerationsmittel zur Herstellung von sphärischen Partikeln von AN - zur Veranschaulichung, daß bei dem erfindungsgemäßen Einsatz des Antiagglomerationsmittels in einer Menge von höchstens 0,5 Mass.-% (Fig. 2) eine Phasenstabilisierung des AN, wie sie bei einem typischerweise zur Phasenstabilisierung verwendeten Anteil von etwa 3 Mass.-% ZnO (Fig. 3) beobachtet wird, noch nicht eintritt. In den Diagrammen ist jeweils die Temperatur T in [°C] (Abszisse) über den Wärmefluß ΔW in [W/g] (Fig. 1 und 2) bzw. in [mJ/sec] = [mW] (Fig. 3) (Ordinate) aufgetragen. Die durchgeführten Messungen erfolgten jeweils bei einer linearen Heizrate von 17°C/min.

Wie aus Fig. 1 ersichtlich, zeigt das reine AN bei den eingestellten Bedingungen drei Umwandlungen der Kristallmodifikation, welche jeweils in Form eines Peaks erkennbar sind. Dabei betragen die mittleren Phasenumwandlungstemperaturen jeweils 54,25°C, 129,23°C bzw. 171,43°C. Der zugehörige Wärmefluß beträgt jeweils 25,87 J/g, 61,22 J/g und 83,13 J/g

Wie der Fig. 2 zu entnehmen ist, weist die erfindungsgemäße Mischung aus 99,9 Mass.-% AN und 0,1 Mass.-% ZnO die identischen Umwandlungen des Kristallgefüges bei entsprechenden mittleren Phasenumwandlungstemperaturen von 54,96°C, 130,11°C bzw. 171,59°C. Ferner zeigt sich im Bereich der die Umwandlungen im Kristallgefüge anzeigenden Peaks ein praktisch identischer Wärmefluß von 25,73 J/g, 61,03 J/g bzw. 82,06 J/g. Folglich tritt bei einer Zugabe von ZnO in einem erfindungsgemäß vorgesehenen Anteil von höchstens 0,5 Mass.-% - vorliegend 0,1 Mass.-% - bezogen auf die Masse von AN eine Phasenstabilisierung noch nicht ein, während eine deutlich verminderte Agglomerationsneigung beobachtet wird.

Demgegenüber weist die auf herkömmliche Weise phasenstabilisierte Mischung gemäß Fig. 3 aus 97 Mass.-% AN und 3 Mass.-% ZnO ein verändertes Umwandlungsverhalten des Kristallgefüges von AN auf, wobei zwischen 20°C und etwa 123°C keine Umwandlung der Kristallmodifikation auftritt und das AN folglich in diesem Temperaturbereich phasenstabilisiert vorliegt. Bei einer mittleren Temperatur von jeweils 127,54°C sowie 167,62°C ist jeweils eine Phasenumwandlung erkennbar, welche mit einem Wärmefluß von 103,69 J/g bzw. 115,89 J/g korrespondiert. Indes neigen die Partikel nach kurzer Standzeit zur Verklumpung und bleiben AN-Agglomerate in Anlagenteilen, insbesondere in dem Schmelzbehälter und in den Düsen, zurück.

## Patentansprüche

1. Verfahren zur Herstellung von sphärischen Partikeln aus Ammoniumnitrat (AN), indem das AN geschmolzen, die Schmelze unter Bildung einer Dispersion zerstäubt und die Dispersion unter Erhalt der Partikel abgekühlt wird, **dadurch gekennzeichnet, daß** dem AN vor dem Schmelzen oder dem bereits geschmolzenen AN vor der Zerstäubung wenigstens ein Antiagglomerationsmittel aus der Gruppe Metalloxide, Metallnitrate, Metallhydroxide, Metallcarbonate, Metallhydroxidnitrate und Metallhydroxidcarbonate mit einem Metall aus der vierten Periode der Übergangsmetalle mit einer Wertigkeit von 2 in einer Menge von höchstens 0,5 Mass.-% bezogen auf die Masse von AN zugesetzt wird, wobei das Antiagglomerationsmittel im wesentlichen homogen in der AN-Schmelze verteilt und die Mischung anschließend zerstäubt wird.

2. Verfahren nach Anspruch 1, **dadurch gekennzeichnet, daß** das Antiagglomerationsmittel in einer Menge zwischen 0,01 Mass.-% und 0,2 Mass.-% zugesetzt wird.

3. Verfahren nach Anspruch 1 oder 2, **dadurch gekennzeichnet, daß** das Antiagglomerationsmittel in einer Menge zwischen 0,02 Mass.-% und 0,1 Mass.-% zugesetzt wird.

4. Verfahren nach einem der Ansprüche 1 bis 3, **dadurch gekennzeichnet, daß** ein Antiagglomerationsmittel mit einem Metall aus der Gruppe Nickel (Ni), Kupfer (Cu) und Zink (Zn) eingesetzt wird.

5. Verfahren nach einem der Ansprüche 1 bis 4, **dadurch gekennzeichnet, daß** das Antiagglomerationsmittel dem AN in geschmolzenem Zustand zugesetzt wird.

6. Verfahren nach einem der Ansprüche 1 bis 4, **dadurch gekennzeichnet, daß** das Antiagglomerationsmittel dem AN in feinpartikulärem Zustand zugesetzt wird.

7. Verfahren nach Anspruch 6, **dadurch gekennzeichnet, daß** das Antiagglomerationsmittel mit einer Partikelgröße zwischen 1 nm und 500 nm zugesetzt wird.

8. Verfahren nach Anspruch 6 oder 7, **dadurch gekennzeichnet, daß** das Antiagglomerationsmittel mit einer Partikelgröße zwischen 10 nm und 50 nm zugesetzt wird.

9. Sphärische Partikel aus Ammoniumnitrat (AN), **dadurch gekennzeichnet, daß** sie wenigstens ein Antiagglomerationsmittel aus der Gruppe Metalloxide, Metallnitrate, Metallhydroxide, Metallcarbonate, Metallhydroxidnitrate und Metallhydroxidcarbonate mit einem Metall aus der vierten Periode der Übergangsmetalle mit einer Wertigkeit von 2 in einer Menge von höchstens 0,5 Mass.-% bezogen auf die Masse von AN enthalten, wobei das Antiagglomerationsmittel im wesentlichen homogen in den AN-Partikeln verteilt ist.

10. Partikel nach Anspruch 9, **dadurch gekennzeichnet, daß** sie das Antiagglomerationsmittel in einer Menge zwischen 0,01 Mass.-% und 0,2 Mass.-% enthalten.

11. Partikel nach Anspruch 9 oder 10, **dadurch gekennzeichnet, daß** sie das Antiagglomerationsmittel in einer Menge zwischen 0,02 Mass.-% und 0,1 Mass.-% enthalten.

12. Partikel nach einem der Ansprüche 9 bis 11, **dadurch gekennzeichnet, daß** sie Antiagglomerationsmittel mit einem Metall aus der Gruppe Nickel (Ni), Kupfer (Cu) und Zink (Zn) enthalten.

13. Partikel nach einem der Ansprüche 9 bis 11, **dadurch gekennzeichnet, daß** sie das Antiagglomerationsmittel in Form von in der Matrix aus AN im wesentlichen homogen verteilten Feinpartikeln mit einer Partikelgröße zwischen 1 nm und 500 nm enthalten.

14. Partikel nach Anspruch 13, **dadurch gekennzeichnet, daß** die Partikelgröße des Antiagglomerationsmittels zwischen 10 nm und 50 nm beträgt.

15. Partikel nach einem der Ansprüche 9 bis 14, **dadurch gekennzeichnet, daß** sie eine Partikelgröße zwischen 1 µm und 500 µm aufweisen.

16. Partikel nach Anspruch 15, **dadurch gekennzeichnet, daß** sie eine Partikelgröße zwischen 2 µm und 200 µm aufweisen.

17. Partikel nach Anspruch 15 oder 16, **dadurch gekennzeichnet, daß** sie eine Partikelgröße zwischen 5 µm und 100 µm aufweisen.
